# EUROPEAN PATENT SPECIFICATION

(11) **EP 0 936 185 B1**
(45) Date of publication and mention of the grant of the patent: **04.08.2004**
(21) Application number: 99301008.1
(22) Date of filing: 11.02.1999
(51) Int. Cl.: C01F 11/18

(54) **Production of products containing precipitated calcium carbonate**
Herstellung von gefällten Kalziumkarbonatenthaltenden Produkten
Production des produits contenant un carbonat de calcium précipité

(30) Priority: 13.02.1998 GB 9802999
(43) Date of publication of application: 18.08.1999
(73) Proprietor: Imerys Minerals Limited, St. Austell Cornwall PL25 4DJ (GB)
(72) Inventor: Spaepen, Hubertus Alexander, 3600 Genk (BE)
(74) Representative: Nash, David Allan

(56) References cited:
- EP-A- 0 604 095
- EP-A- 0 799 797
- US-A- 4 888 160
- DATABASE WPI Section Ch, Week 9439 Derwent Publications Ltd., London, GB; Class E33, AN 94-314611 XP002103466 & SU 1 760 735 A (CHEM TECHN RES INST) , 30 January 1994
- LAINE J: "MANUFACTURE OF PRECIPITATED CALCIUM CARBONATE" PAPERI JA PUU - PAPER AND TIMBER, vol. 62, no. 11, 1 January 1980, pages 725-734, XP000617144

## Description

The present invention relates to the production of products containing precipitated calcium carbonate. In particular, the present invention relates to a method of producing precipitated calcium carbonate in an aqueous medium optionally containing non-consumable solids to be entrained by and bonded to the calcium carbonate.

Synthetic production of calcium carbonate for use as a fine particulate pigment material in applications such as paper filling and paper coating is well known.

It is also known from EP-A-0604095 that a fine particulate solid, eg waste material may be rendered more easily separable from an aqueous medium in which it is suspended if an alkaline earth metal carbonate, and particularly calcium carbonate, is precipitated in the aqueous suspension in such a way that the fine solid material becomes entrained in and bonded to the crystals of the alkaline earth metal carbonate precipitate.

Other prior art references describe the production of precipitated calcium carbonate in an aqueous medium containing other non-consumable solids, eg fibres of the kind used in paper making, the composite product then being useful in paper making.

Methods of producing precipitated calcium carbonate, whether or not containing entrained and/or bonded non-consumable solids, are well known.

TAPPI Monograph Series No 30, "Paper Coating Pigments", pages 34-35 describes three main commercial processes for preparing precipitated calcium carbonate which is especially suitable for use in preparing products for use in the paper industry. In all three processes limestone is first calcined to produce quicklime, and the quicklime is then slaked in water to yield calcium hydroxide or milk of lime. In the first process the milk of lime is directly carbonated with carbon dioxide gas. This process has the advantage that no by-product is formed, and it is relatively easy to control the properties and purity of the calcium carbonate product. In the second process the milk of lime is contacted with soda ash to produce by double decomposition a precipitate of calcium carbonate and a solution of sodium hydroxide. The sodium hydroxide must be substantially completely separated from the calcium carbonate if this process is to be commercially attractive. In the third main commercial process the milk of lime is first contacted with ammonium chloride to give a calcium chloride solution and ammonia gas. The calcium chloride solution is then contacted with soda ash to produce by double decomposition precipitated calcium carbonate and a solution of sodium chloride.

If the calcium carbonate-containing product is to be used as a filler or as a coating pigment in the paper industry, it is generally preferred to use the first process described above, namely the direct carbonation of milk of lime with carbon dioxide-containing gas, because this process yields no undesirable by-products which have to be removed before the calcium carbonate-containing product can be used in the paper industry. Generally the process of carbonating milk of lime is carried out on a batch basis. A vessel is charged with a quantity of milk of lime at an appropriate temperature and concentration, and carbon dioxide-containing gas is admitted into the vessel, generally in the form of fine bubbles. Mechanical stirring means may be provided to ensure good mixing of the contents of the vessel, and to promote the formation and continuation of small bubbles of the carbon dioxide-containing gas. The admission of the carbon dioxide-containing gas is generally continued until substantially all of the calcium hydroxide present has been converted into calcium carbonate. This may conveniently be indicated by monitoring the pH of the suspension in the vessel. When the pH has fallen to around 7, at which level the suspension has a substantially neutral reaction, the reaction is deemed to be complete. The process may be conducted in two or more stages with vessels of the type described above connected in cascade, but each stage still takes place on a batch basis. The batch process generally has the disadvantage of requiring a high degree of supervision, and variations in the product tend to occur from batch to batch. It would be desirable to be able to operate the calcium carbonate precipitation process on a completely continuous, rather than a batch, basis. The reactants move progressively through the reaction zone in a continuous reaction. It is necessary to provide a process plant which will allow the reactants adequate residence time in the plant for substantially complete carbonation of the calcium hydroxide to occur. The residence time which the reactants spend in the plant is proportional to the length of the path followed by the reactants through the plant. Thus in order to increase the residence time, it is necessary to increase the physical size of the plant, which in turn increases the capital cost of the plant. It is therefore important, from an economic point of view, that the chemical reaction of the carbonation of the calcium hydroxide should take place as rapidly as possible.

WO-A-97/05061 (Unikristal) describes a plant for continuous production of precipitated calcium carbonate. The plant generally comprises from 10 to 15 interconnected cells, each of which is provided with an inlet conduit for a suspension comprising calcium hydroxide, an outlet conduit for a suspension of partially carbonated calcium hydroxide, a propeller-type stirrer rotated by mean of a hollow shaft, down which carbon dioxide-containing flue gas is supplied, the shaft being surrounded by a cylindrical tube. The inlet conduit communicates with the space between the shaft and the cylindrical tube, and the outlet conduit passes through the outer wall only of the cell, and draws suspension from the part of the cell between the cylindrical tube and the cell wall. When the stirrer is set in motion, the level of suspension near the cell wall rises, causing suspension to overflow through the outlet conduit, and at the same time drawing fresh suspension in through the inlet conduit. Meanwhile, carbon dioxide-containing gas is passed down through the shaft and is dispersed by the stirrer to rise through the suspension in the form of fine bubbles, which are said to provide a large area of contact between the calcium hydroxide-containing suspension and the carbon dioxide gas. Each cell is provided with a water jacket to control the temperature of the contents of the cell.

DE-A-2742829 (Shiraishi Kogyo Kaisha) describes a plant for continuous production of precipitated calcium carbonate in which droplets of calcium hydroxide suspension are sprayed countercurrently to a gas containing 10-40% by volume of carbon dioxide which flows upwards through a column, in a three stage process. The sizes of the suspension droplets in the three stages are, respectively, 0.2-1.0mm, 1.0-2.0mm and 1.5-2.0mm, and the degrees of carbonation achieved in each of the three stages are, respectively, 5-15%, 95-98% and 100%. This arrangement may be said to be a case of a reversed phase reaction, because droplets of liquid calcium hydroxide suspension are suspended in a gas phase.

US-A-4888160 (Kosin et al.) describes a carbonation process for producing calcium carbonate from calcium hydroxide derived from limestone which provides improved utilisation of the carbon dioxide gas used in the carbonation process. A gas containing carbon dioxide is injected into a recirculating stream flowing in a recycle piping system which is in communication with a reaction vessel. The carbon dioxide-containing gas is injected at a turbulent point or area located in the recycle piping system, for example where the stream executes a 90° bend. Preferably at least one in-line static mixer is included in the recycle piping system, most preferably just downstream of the point of admission of the carbon dioxide-containing gas. This is a recirculating, rather than a "straight through", system.

According to the present invention there is provided a method of continuously or semi-continuously producing a product comprising precipitated calcium carbonate in an aqueous medium which method comprises delivering an aqueous suspension of calcium hydroxide in sequence through a series of at least two static in-line mixers whilst carbon dioxide is introduced into the suspension at or before each of the mixers whereby carbon dioxide and the aqueous suspension are intimately mixed in each mixer to facilitate reaction of the carbon dioxide with calcium hydroxide dissolved in the aqueous medium, the calcium hydroxide in the suspension delivered to the series of static in-line mixers being progressively consumed and converted to calcium carbonate as the suspension passes through the series.

In the method according to the invention the series of in-line static mixers may comprise at least three such mixers, preferably from four to seven such mixers. Each of the static in-line mixers may comprise an outer casing and a plurality of internal static vanes or baffles which cause the treated aqueous suspension to undergo changes of direction, eg many rapid changes. Each of the static in-line mixers desirably permits carbon dioxide to be uniformly distributed through the mixed suspension in the form of fine bubbles in the mixer.

The speed of the reaction in the method according to the invention depends, amongst other things, on the area of contact between the carbon dioxide-containing gas and the aqueous suspension of calcium hydroxide. This area of contact may be increased by ensuring that the carbon dioxide-containing gas travels through the suspension in the form of the smallest possible bubbles. It is therefore important that the gas enters the suspension in the form of small bubbles, that the bubbles are well dispersed throughout the suspension, and that the bubbles remain small substantially throughout their passage through the plant. The present invention allows these requirements to be met.

In the method according to the invention the aqueous suspension preferably enters the first of the series of mixers at a hydraulic pressure in the range 50kPa to 100kPa. The hydraulic pressure of the aqueous suspension is conveniently arranged to fall progressively as it passes through the series of static in-line mixers. Carbon dioxide delivered to be mixed with the suspension in the first in-line mixer in the series may be at a pressure in the range 50kPa to 150kPa. Carbon dioxide delivered to be mixed with the suspension in at least two subsequent in-line mixers in the series may be at pressures reduced progressively from mixer-to-mixer. The carbon dioxide to be mixed with the suspension in each in-line static mixer may be delivered along a separate conduit for each mixture with the suspension. The carbon dioxide delivered along each conduit may be provided from a common carbon dioxide source. Each conduit may incorporate means for independently adjusting the pressure of the carbon dioxide delivered to be mixed with the aqueous suspension.

In the method according to the invention the aqueous suspension in which the precipitated calcium carbonate is to be produced by reaction of calcium ions and carbonate ions from carbon dioxide may include non-consumable solids, ie solids which do not substantially take part in chemical reaction, to be entrained by and/or bonded to the crystals of precipitated calcium carbonate produced in the aqueous medium. The non-consumable solids may comprise fibres, eg cellulose pulp fibres of the kind used in paper making, or present in a waste stream from a paper making operation. Where the fibres are present in a waste stream they may be present together with particulate material, eg a mixture of pigment or filler materials.

The non-consumable solids may constitute from 0.5% to 20% by weight of the aqueous suspension of the non-consumable solids in the aqueous medium.

The ratio by dry weight of the non-. consumable solids to calcium hydroxide delivered to be mixed with carbon dioxide in the first in-line static mixer is preferably in the range 1:10 to 10:1.

The non-consumable solids may have been obtained from an aqueous effluent of an industrial process, eg a paper making, paper coating or paper de-inking process.

For example, where the aqueous suspension contains non-consumable solids which are fines from an industrial effluent the method may be carried out as described in Applicant's EP-A-604095A or EP-A-658606.

Alternatively, the non-consumable solids may comprise fibres not obtained from waste streams with or without inorganic particulate filler or pigment material, eg as described in our EP-0,892,019-A1. The non-consumable solids may be present in an amount which results in an aggregate product including precipitated calcium carbonate containing from 10% to 90% by weight, eg 25% to 75% by weight of the non-consumable solids. In some cases, at least 20% of the non-consumable solids may comprise non-fibrous particulate pigment or filler material.

The aqueous medium may comprise mains water or it may alternatively comprise a dilute suspension of non-consumable solids, eg fibres and/or fine particulate waste material in which the fine particles are difficult to separate from the water by conventional means. Such dilute suspensions are produced, for example, as a white water waste stream of a process to produce sheets of paper in a paper mill. Such suspensions generally comprise fine solids known in the art as "fines" by which is meant those solids that are capable of passing through a round hole of diameter 76µm. Generally, "fines" comprise fine cellulose and other fibrils and fine mineral particles, eg mineral particles of diameter of the order of 2µm or smaller.

By the method of the present invention it is possible, in a continuous, rather than a batchwise, manner to produce a calcium carbonate containing product, optionally wherein non-consumable solid material, eg fibres and/or fines, is entrained and/or bonded and thereby rendered useful in known applications as described later.

The calcium hydroxide employed in the aqueous medium in the method of the present invention may be prepared separately and added to the aqueous medium or alternatively may be prepared in situ in the aqueous medium for example by slaking calcium oxide. Where the aqueous medium comprises calcium hydroxide produced by slaking, the calcium hydroxide will be in the form of a suspension. Calcium ions will sparingly enter solution and will be continuously consumed and replaced as the reaction with carbon dioxide proceeds. Preferably, a suspension formed in this way contains between 0.5 mole and 3.0 moles, especially 1.0 to 2.0 moles, of the calcium hydroxide. For slaking, the temperature of the aqueous medium may be from 0°C to 80°C. The temperature will rise during the slaking process and if the aqueous medium is not at the appropriate temperature after slaking, it may be cooled before introduction of the carbon dioxide-containing gas.

Efficient dispersion and dissolution of the calcium hydroxide may be assisted by agitation, eg by stirring of the aqueous suspension, to provide uniform distribution of the particulate solid material comprising the hydroxide.

The aqueous medium in which the alkaline earth metal ions are contained and reacted with carbon dioxide in the method according to the present invention may also contain one or more chemicals of a kind known for use in precipitate production, eg it may comprise a buffer solution to give the product so-called acid tolerance or an organic additive known in the art to facilitate precipitate crystal nucleation.

The carbon dioxide used in the method according to the invention may be substantially pure carbon dioxide eg as commercially supplied in a compressed gas cylinder or may be present in a mixture with other gases. The supplied carbon dioxide gas may alternatively be diluted with other inert gases, eg air, nitrogen, etc. The carbon dioxide may be present as a mixture of spent gases such as flue gases, eg obtained from a lime calcination plant in which quicklime is produced for conversion into slaked lime (for use in the process according to the first aspect). The carbon dioxide when present in the aqueous medium will be present as bubbles, preferably fine bubbles and, as stated earlier, the calcium hydroxide which is contacted by the carbon dioxide may comprise an aqueous medium containing calcium and hydroxyl ions as well as a suspension of solid calcium hydroxide which becomes dissolved in the aqueous medium as the calcium ions are consumed by reaction with the carbon dioxide.

The temperature of the aqueous medium when the carbon dioxide-containing gas is added thereto is preferably in the range of from 10°C to 80°C, especially 20°C to 60°C.

The calcium carbonate-containing precipitate product formed in the method according to the first aspect of the present invention may be further processed for example by dewatering and/or by subjecting the precipitate-containing suspension to comminution, eg by attrition grinding with an attrition grinding medium, eg as described in Applicant's copending EP 96307320.0.

The precipitate product produced by the method according to the invention, whether formed of substantially pure precipitate calcium carbonate crystals or in the form of a precipitate-containing composite, may be employed in applications in which particulate precipitates of calcium carbonate formed are known to be useful.

Thus, the precipitate product may, for example, be employed as a particulate filler, pigment, extender or property modifier in a known way in compositions for manufacture of paper, paints, polymers, plastics, cements and ceramics, and articles made therefrom. The precipitate product may have properties selected for the particular application. The product may be treated by known chemical or physical processes, after production to render it suitable for the particular application.

A preferred form of the precipitate product for use as a fine pigment in a paper coating composition has a particle size distribution such that at least 70% by weight and desirably at least 90% by weight of the precipitate particles have an equivalent spherical diameter (as measured by sedimentation) of less than five micrometres. A preferred product particle size distribution for the precipitate product is one in which the particle size distribution is such that the percentage by weight of particles have an equivalent spherical diameter (measured by sedimentation) smaller than 2µm is 50 per cent or more by weight. The particular size distribution will be determined by the end use application of the precipitate product.

The precipitate product will generally comprise either the rhombohedral or the scalenohedral variant of the calcite crystal form of calcium carbonate, or the aragonite crystal form or a mixture of these forms. The crystal form in which the calcium carbonate is precipitated depends upon the reaction conditions.

As described in our EP 96307320.0 the conditions under which the method according to the first aspect is carried out may be chosen to give predominantly a selected crystal form of the precipitate product. The process conditions during the precipitation process required generally to achieve predominantly a preferred crystal form are well known to those skilled in the art. The crystal pcc form achieved in practice is, in any case, unlikely to be 100% of any selected form. It is quite usual for one crystal form even when predominant to be mixed with other forms. Such mixed forms will generally give suitable product properties.

The precipitate product in the form of an aqueous suspension preferably has a viscosity of not more than 500m Pa.s (as measured by a Brookfield Viscometer using a spindle speed of 100 rpm) and is preferably a pumpable and flowable slurry.

The precipitate product produced by the method according to the present invention may be mixed with other particulate materials known for use in the applications for the product, eg as mentioned above.

For example, where the precipitate product is to be employed as a pigment material for paper coating it may be mixed with one or more other pigment materials eg known materials selected from titanium dioxide, talc, calcium sulphate, kaolin clay, calcined kaolin and precipitated or ground calcium carbonate. A paper coating pigment mixture may beneficially include a mixture of the precipitate product and a kaolin clay. Such a pigment mixture may comprise from 5% to 99%, especially 20% to 70%, by weight of the precipitate product. For paper coating applications platey kaolin clay is especially preferred to form the pigment mixture with the precipitate product optionally together with other pigment ingredients by "platey" kaolin clay is meant a kaolin clay having an aspect ratio of at least 20:1, preferably at least 30:1.

A pigment mixture may be formed by mixing aqueous suspensions of each of the required pigments to form an aqueous suspension incorporating the mixture of pigments. Such an aqueous suspension may be a dispersed aqueous suspension and the individual aqueous suspensions of pigments employed to form the mixture may each incorporate a dispersing agent. The dispersing agents employed to disperse the pigments in the individual aqueous suspensions mixed together, and the concentrations of such suspensions, may be the same or different.

A paper coating composition which comprises an aqueous suspension of a precipitate product produced by the method according to the present invention mixed together with a hydrophilic adhesive. The precipitate product employed in the composition may be mixed with one or more pigments as described above. The adhesive may form from 4% to 30% by weight based on the total dry weight of pigment or pigments present. The adhesive may be one of the known paper coating adhesives employed in the art, eg chosen from the group consisting of starches, proteinaceous adhesives such as casein and latices of, for example, styrene butadiene rubbers and acrylic polymers.

The paper coating composition produced using the precipitate product may also include one or more optional additives conventionally used in paper coating compositions, eg a thickener, eg in an amount of up to 2% by weight based upon the total dry weight of pigment or pigments present. The thickener may comprise one or more substances known to be employed as thickeners in the prior art, eg sodium carboxymethyl cellulose or synthetic acrylic thickeners.

The said paper coating composition may be formed by mixing together an aqueous dispersed suspension containing the precipitate product optionally with one or more further aqueous dispersed suspensions containing other pigments, with the adhesive and any other optional constituents eg thickener, in a manner familiar to those skilled in the art.

The aqueous suspension containing the precipitate product formed in the method of the present invention may be treated so as to separate partially or fully the aqueous host medium from the precipitate product solids using one or more separation processes which may be known processes. For example, processes such as filtration, sedimentation, centrifugation or evaporation may be used. Filtration using a filter press is preferred. The separated aqueous medium, eg water, may, optionally with further purification or clarification by one or more chemical, biochemical or mechanical processes which may be known per se, may be recycled for reuse, eg in a paper mill, eg for use in diluting the paper making stock or for use as showers for washing machinery. The separated solids may be assessed for quality control by measurements taken on samples and subsequently delivered to a storage tank and thereafter supplied as necessary for use in a user application, eg as described hereinbefore. The solids containing suspension may be re-diluted for use at the user plant.

It is not necessary for an aqueous suspension containing a precipitate product produced by the method of the present invention to be dewatered prior to supply for use in a user application, eg for use in a paper mill. The aqueous suspension or slurry may be delivered to a storage tank or directly to the user plant without substantial dewatering.

Where the precipitate product is to be used as a filler in a paper making composition the precipitate product may be supplied to the mill in one of various concentrations in water. The concentration may range from dilute suspension form to dry particulate solids. The precipitate product after formation in the method according to the present invention may or may not be treated as appropriate, eg by dewatering or not, so that it may be delivered to the user plant, eg paper making mill, in the required concentration.

The extent of dilution or concentration of the form in which the precipitate product is added to the user composition, eg paper making composition does not critically affect the properties of the resulting product, eg paper sheet. It may, however, for economic and practical reasons be more suitable to supply the product in the form of a concentrated pumpable aqueous slurry. Where the product is supplied for use in a process at another location it may be preferable to dry the product prior to transport. Where the product has been concentrated or dried prior to delivery and subsequently redispersed in or diluted with clean water prior to reuse, the concentration and dilution steps do not materially affect the usefulness of the product.

In any event, where the precipitate product is to be used as a filler material in paper making, the precipitate product may, as will be clearly evident to those familiar with the paper making art, be blended in various proportions with conventional filler materials, eg precipitated or natural , eg ground, calcium carbonate, kaolin or other clay, metakaolin, talc, calcium sulphate etc, the ingredients and composition as well as the host fibres being selected according to the quality of paper required to be produced. In general, these materials are likely to be in slurry form when they are mixed.

The paper maker will normally select the concentration of the precipitate product (produced in accordance with the present invention) in aqueous suspension and the delivery rate of the suspension at the point of addition to the paper making composition, eg finish. As noted above, this may require re-dilution of a suspension which has been delivered to the paper mill in concentrated form. Generally, the suspension added may contribute precipitate product which forms optionally with other particulate fillers up to 30% by weight of the solids content of the paper making composition.

An embodiment of the present invention will now be described by way of example with reference to the accompanying drawings in which:

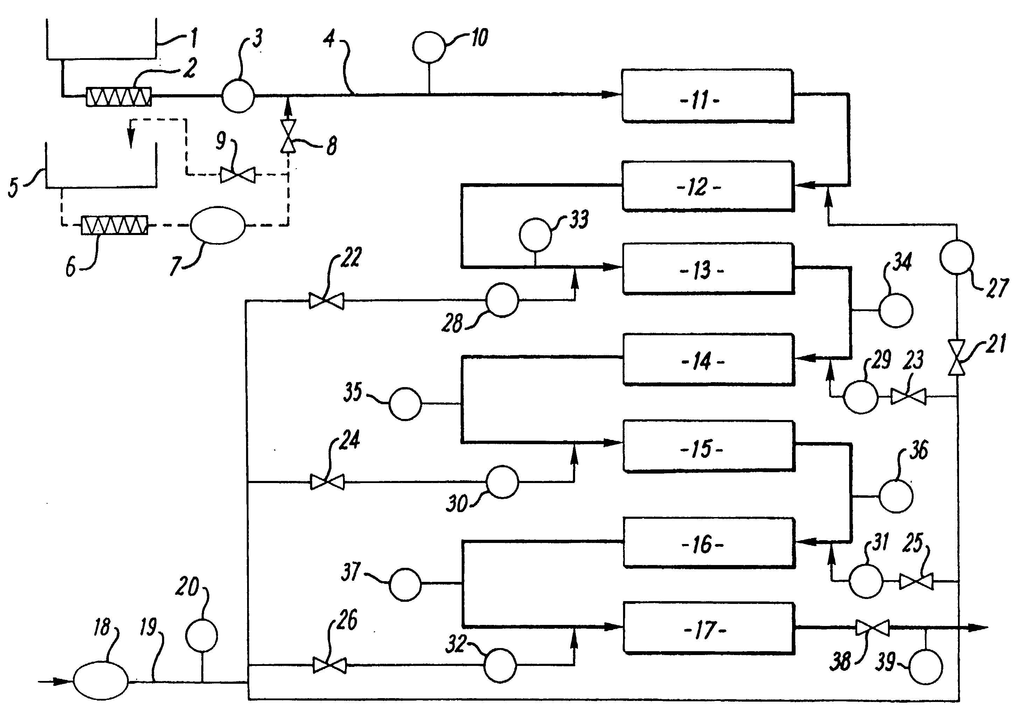

Figure 1 is a diagrammatic representation of the flow sheet of a plant for the continuous precipitation of calcium carbonate in an aqueous suspension containing a fine, non-consumable particulate material.

As shown in Figure 1, a suspension of fine solid material, eg derived from the waste water recovery system of a paper mill, the so-called "white water" is stored in a tank 1. The suspension has a total solids content which is generally in the range of from about 0.5% to about 8% by weight of solids on a dry weight basis, and the solids generally comprise a mixture of short cellulosic fibres such as would pass through a round hole of diameter 76µm and of fine mineral filler particles substantially all of which have an equivalent spherical diameter smaller than 1µm. The suspension is delivered by means of a pump 2 through a flow meter 3 into a conduit 4 at a hydraulic pressure in the range of from 5 to 10 bar (50kPa to 100kPa). The pump is conveniently of the single-rotor screw pump type, for example of the Moyno or "MONO"™ type. This type of pump comprises a metal rotor which rotates within and coaxially with an elastomeric stator, the rotor and stator being of such design that the fluid passing through the space between them is compelled to follow a substantially helical path. Pumps of this type are capable of delivering liquids at pressures of up to about 20 bar or more. A suspension of calcium hydroxide, which may have a solids content in the range of from about 5% to about 40% by weight, is prepared in a tank 5 and is delivered by means of a pump 6, which may conveniently be of the same type as pump 2, through a combined flow and density meter 7 and a throttle valve 8 to conduit 4, where the lime suspension mixes with the suspension of waste solid material. A portion of the calcium hydroxide delivered by pump 6 may be diverted through a throttle valve 9 back to tank 5. The proportion of calcium hydroxide suspension and waste solid material suspension in the mixture in conduit 4 may be determined by adjusting the settings of valves 8 and 9. The mixed suspension is delivered under a pressure which is monitored by a pressure gauge 10 to an in-line static mixer 11 which effects thorough mixing of the calcium hydroxide with the waste solid material. The in-line static mixer conveniently comprises a cylindrical outer casing and a large number of internal static vanes or baffles which cause the mixed suspension to undergo a large number of sudden changes of direction. In this way the turbulence of the suspension flowing in conduit 4 is increased and efficient mixing takes place.

The mixed suspension leaving in-line mixer 11 then passes through a series of six further in-line mixers 12, 13, 14, 15, 16 and 17, each of which is of similar general design to in-line mixer 11. Carbon dioxide gas under a pressure of 10 bar is delivered from supply means 18 through a conduit 19 to a manifold system, the pressure of the gas in conduit 19 being monitored by a pressure gauge 20. Carbon dioxide gas is metered to the upstream end of each of the in-line mixers 12 to 17 through throttle valves 21, 22, 23, 24, 25 and 26, respectively, the flow rate of gas to each of the in-line mixers 12 to 17 being monitored by flow meters 27, 28, 29, 30, 31 and 32, respectively. The hydraulic pressure of the mixed suspension entering in-line mixers 13, 14, 15, 16 and 17 is monitored by pressure gauges 33, 34, 35, 36 and 37 respectively. The hydraulic pressure of the mixed suspension decreases as the suspension passes through each successive in-line mixer, and the calcium hydroxide present in the suspension is progressively converted to calcium carbonate through contact with the carbon dioxide gas, until the suspension leaving the final in-line mixer 17 contains substantially no unconverted calcium hydroxide. The design of the in-line mixers is such that the carbon dioxide gas is uniformly dispersed throughout the mixed suspension in the form of extremely fine bubbles. This ensures that there is a very large area of contact between the gas and the suspension which enables the carbonation reaction to proceed rapidly, so that carbonation is substantially completed in the time taken for the suspension to pass through the series of in-line mixers.

The suspension containing precipitated calcium carbonate leaves the final in-line mixer 17 through a throttle valve 38 and the pH of this product suspension is monitored by a pH meter 39.

Examples of methods carried out using a plant as shown in Figure 1 are as follows.

### EXAMPLE 1

A white water waste suspension from a paper mill contained 8% by weight of a mixture of solids which comprised both short cellulosic fibres and fine mineral filler particles. Dilution water was added to this suspension in sufficient quantity to reduce the solids concentration to 2.25% by weight and the diluted suspension was pumped by means of a Moyno pump at a rate of about 27kg.min⁻¹ through a static in-line mixer to ensure homogeneity. A suspension containing 20% by weight of calcium hydroxide was separately prepared, and this suspension was pumped by means of a Moyno pump at a rate of 2.22 kg.min⁻¹ to combine with the waste suspension. The combined suspension passed at a rate of about 29kg.min⁻¹ through a static in-line mixer to ensure thorough mixing. The mixed suspension entered a series of static in-line mixers as described above with reference to Figure 1, except that the plant comprised five in-line mixers, rather than six. The mixed suspension entered the first in-line mixer under a hydraulic pressure of 6 bar.

Carbon dioxide gas under pressure was introduced into the mixed suspension as it entered each of the five in-line mixers under the conditions shown in Table 1 below:

**TABLE 1**

| **Mixer** **No** | **CO**_{**2**} **Pressure** **(bar)** | **CO**_{**2**} **Flow rate** **(1.min**^{**-1**} **as measured** **at pressure shown in** **column 2)** | **Mass flow** **(kg.hr**^{**-1**}**)** |
|---|---|---|---|
| 1 | 6 | 6 | 3.97 |
| 2 | 5 | 7.18 | 3.97 |
| 3 | 4 | 9 | 3.97 |
| 4 | 3 | 12 | 3.97 |
| 5 | 2 | 8 | 1.76 |
| Total | | | 17.63 |

The total rate of supply of carbon dioxide gas, namely about 18kg.hr⁻¹, was slightly greater than the stoichiometric rate of about 16kg.hr⁻¹ which was calculated to carbonate completely the calcium hydroxide being supplied in the mixed suspension.

The precipitate product obtained from the final in-line mixer was a suspension in which the waste solids fines were entrained in and bonded to an approximately equal weight of precipitated calcium carbonate of good crystalline form. The product was found to have a good white colour and light scattering properties, and to be a very suitable material for mixing with cellulosic fibres and other ingredients of a wet stock for feeding to the headbox of a paper making machine for paper making in the manner described earlier.

### EXAMPLE 2

Precipitated calcium carbonate was prepared by a continuous process using the apparatus described above with reference to Figure 1. A calcium hydroxide suspension containing 13.9% by dry weight of calcium hydroxide was pumped at a flow rate of 102 litre.hr⁻¹ together with 1980 litre.hr⁻¹ of water into the first of a series of six static in-line mixers under a hydraulic pressure of 7.3 bar. Carbon dioxide gas was introduced into the calcium hydroxide suspension at the upstream end of each in-line mixer and was dispersed throughout the suspension in each mixer in the form of very fine bubbles. In each mixer conversion of calcium hydroxide to calcium carbonate took place, so that the suspension leaving the final in-line mixer contained substantially no unconverted calcium hydroxide. The total rate of supply of carbon dioxide gas was 18.5 kg.hr⁻¹. The flow rates of calcium hydroxide suspension and of carbon dioxide gas corresponded to rates of 210 moles of calcium hydroxide per hour and 420 moles of carbon dioxide per hour. The mixture of gas and suspension flowed evenly through each stage of the process without the formation of plugs of gas. This indicated that the gas supplied at the upstream side of each in-line mixer was well absorbed by the calcium hydroxide in the suspension in that mixer.

The precipitated product was precipitated calcium carbonate having a predominantly rhomobohedral crystal form. The particle size distribution of the calcium carbonate was such that 86% by weight consisted of particles having an equivalent spherical diameter smaller than 5µm and 50% by weight consisted of particles having an equivalent spherical diameter smaller than 2µm. The colour and brightness of the calcium carbonate was such that the reflectance to light of wavelength 457nm was 92.8% and the reflectance to light of 570nm was 95.1%. The reflectance tests were carried out in accordance with International Standard No ISO 2470.

### EXAMPLE 3

Calcium carbonate was precipitated in a suspension of a fine particulate waste material by a continuous process using the apparatus described above with reference to Figure 1. A suspension of the waste material was derived from the white water recovery circuit of a paper mill. It was pumped through a static in-line mixer together with a calcium hydroxide suspension containing 13.9% by dry weight of calcium hydroxide. The suspension of waste material contained 2.45% by weight of dry fine particulate waste material, comprising a mixture of short cellulosic fibres and fine mineral filler material, ie "fines", and was pumped at a rate of about 2000kg.hr⁻¹. The calcium hydroxide suspension was pumped at a rate of about 200kg.hr⁻¹, so that the mixed suspension entered the first of a series of six static in-line mixers at a flow rate of about 2200kg.hr⁻¹ under a hydraulic pressure of 7.7 bar. Carbon dioxide gas was introduced into the mixed suspension at the upstream end of each in-line mixer and was dispersed throughout the suspension in each mixer in the form of very fine bubbles. In each mixer conversion of calcium hydroxide to calcium carbonate took place, so that the suspension leaving the final in-line mixer contained substantially no unconverted calcium hydroxide. The total rate of supply of carbon dioxide gas was about 17kg.hr⁻¹. The flow rates of calcium hydroxide suspension and of carbon dioxide gas corresponded to rates of 366 moles of calcium hydroxide per hour and 377 moles of carbon dioxide per hour. Again the mixture of gas and suspension flowed evenly through each stage of the process without the formation of plugs of gas.

The precipitate product was a suspension of composite particles of fines entrained by and bonded to crystals of precipitated calcium carbonate having a good white colour and crystal form. The composite particles contained in the suspension were dewatered by filtration and the percentage reflectance to light of wavelengths 457nm and 570nm, respectively, were measured in accordance with ISO Standard No 2470. The filtration rate was also determined according to the method described in EP-A-0604095. The results are set forth in Table 2 below. The same tests were also performed on a dewatered sample of the original suspension of fine particulate waste material, and the results are also given in Table 2 below for comparison.

**TABLE 2**

| | **Fine particulate** **waste material** | **Product** **embodying the** **invention** |
|---|---|---|
| **% reflectance to light of 457nm wavelength** | 76.4 | 83.7 |
| **% reflectance to light of 570nm wavelength** | 84.2 | 88.9 |
| **Filtration rate** | 0.063 | 0.6061 |

These results show that the precipitate product obtained by a method embodying the invention has a desirable whiteness and brightness which renders it a very suitable material for mixing with cellulosic fibres and other ingredients of a wet stock for feeding to the headbox of a paper making machine for use as a filler in paper making in the manner described earlier. The filtration rate of a suspension containing the solid material has also been increased by a factor of about 10 which makes it much easier to separate from an aqueous medium in which it is suspended.

## Claims

1. A method of continuously or semi-continuously producing a solid product comprising precipitated calcium carbonate in an aqueous medium which method comprises delivering an aqueous suspension of calcium hydroxide in sequence through a series of at least two static in-line mixers whilst carbon dioxide is introduced into the suspension at or before each of the mixers whereby carbon dioxide and the aqueous suspension are intimately mixed in each mixer to facilitate reaction of the carbon dioxide with calcium hydroxide dissolved in the aqueous medium, the calcium hydroxide in the suspension delivered to the series of static in-line mixers being progressively consumed and converted to calcium carbonate as the suspension passes through the series.

2. A method as claimed in claim 1 and wherein the series of in-line static mixers comprises at least three such mixers.

3. A method as claimed in claim 2 and wherein the series of in-line static mixers comprises from four to seven such mixers.

4. A method as claimed in claim 1, claim 2 or claim 3 and wherein each of the static in-line mixers comprises an outer casing and a plurality of internal static vanes or baffles which cause the suspension to undergo changes of direction.

5. A method as claimed in any one of the preceding claims and wherein each of the static in-line mixers permits carbon dioxide to be uniformly distributed through the mixed suspension in the form of fine bubbles.

6. A method as claimed in any one of the preceding claims and wherein the aqueous suspension enters the first of the series of mixers at a hydraulic pressure in the range 50kPa to 100kPa.

7. A method as claimed in any one of the preceding claims and wherein the hydraulic pressure of the aqueous suspension progressively falls as it passes through the series of static in-line mixers.

8. A method as claimed in any one of the preceding claims and wherein carbon dioxide is delivered to be mixed with the suspension in the first in-line mixer in the series at a pressure in the range 50kPa to 150kPa.

9. A method as claimed in claim 8 and wherein carbon dioxide is delivered to be mixed with the suspension in at least two subsequent in-line mixers in the series at pressures reduced progressively from mixer-to-mixer.

10. A method as claimed in any one of the preceding claims and wherein the carbon dioxide to be mixed with the suspension in each in-line static mixer is delivered along a separate conduit for each mixture with the suspension.

11. A method as claimed in claim 10 and wherein the carbon dioxide delivered along each conduit is provided by a common source.

12. A method as claimed in claim 10 or claim 11 and wherein each conduit incorporates means for independently adjusting the pressure of the carbon dioxide delivered to be mixed with the aqueous suspension.

13. A method as claimed in any one of the preceding claims and wherein the aqueous suspension includes non-consumable solids to be entrained by and/or bonded to the precipitated calcium carbonate produced in the aqueous medium.

14. A method as claimed in claim 13 and wherein the non-consumable solids comprise fibres and/or particles.

15. A method as claimed in claim 13 and wherein the non-consumable solids comprise cellulose fibres and/or inorganic pigment particles.

16. A method as claimed in claim 14 or claim 15 and wherein the non-consumable solids comprise fines.

17. A method as claimed in claim 16 and wherein the fines have been obtained from an aqueous effluent of an industrial process.

18. A method as claimed in claim 17 and wherein the fines have been obtained from an aqueous effluent from a paper making or paper coating process.

19. A method as claimed in any one of claims 13 to 18 and wherein the non-consumable solids constitute from 0.5% to 20% by weight of the aqueous suspension of the non-consumable solids in the aqueous medium.

20. A method as claimed in any one of claims 13 to 19 and wherein the ratio by dry weight of the non-consumable solids to calcium hydroxide delivered to be mixed with carbon dioxide in the first in-line static mixer is in the range 1:10 to 10:1.

21. A method as claimed in claim 20 and wherein an aqueous suspension of the non-consumable solids and an aqueous suspension of the calcium hydroxide are mixed together in a static in-line mixer to produce the aqueous suspension to be delivered to the first in-line static mixer.

## Patentansprüche

1. Verfahren zur kontinuierlichen oder halbkontinuierlichen Herstellung eines festen Produkts, das gefälltes Calciumcarbonat umfasst, in einem wässrigen Medium, umfassend das Durchleiten einer wässrigen Suspension von Calciumhydroxid durch eine Reihenfolge von mindestens zwei statischen Inline-Mischern, während an oder vor den Mischern jeweils Kohlendioxid in die Suspension eingebracht wird, so dass in den Mischern jeweils das Kohlendioxid mit der wässrigen Suspension eng vermengt wird und die Umsetzung des Kohlendioxids mit dem in dem wässrigen Medium gelösten Calciumhydroxid erleichtert ist, wobei das Calciumhydroxid in der Suspension, die der Reihe von statischen Inline-Mischern zugeführt wird, fortlaufend verbraucht und zu Calciumcarbonat umgewandelt wird, wie die Suspension durch die Reihe läuft.

2. Verfahren nach Anspruch 1, wobei die Reihe der statischen Inline-Mischer mindestens drei derartige Mischer umfasst.

3. Verfahren nach Anspruch 2, wobei die Reihe der statischen Inline-Mischer vier bis sieben derartige Mischer umfasst.

4. Verfahren nach Anspruch 1, 2 oder 3, wobei die statischen Inline-Mischer jeweils ein Außengehäuse und eine Anzahl statischer Innenflügeln oder Prallflächen aufweisen, welche bewirken, dass die Suspension Richtungsänderungen erfährt.

5. Verfahren nach einem der vorhergehenden Ansprüche, wobei die statischen Inline-Mischer jeweils ermöglichen, dass das Kohlendioxid in der gemischten Suspension gleichmäßig in Form feiner Blasen verteilt wird.

6. Verfahren nach einem der vorhergehenden Ansprüche, wobei die wässrige Suspension unter einem hydraulichen Druck im Bereich von 50 kPa bis 100 kPa in den ersten Mischer der Mischerreihe gelangt.

7. Verfahren nach einem der vorhergehenden Ansprüche, wobei der hydraulische Druck der wässrigen Suspension mit dem Durchgang durch die Reihe statischer Inline-Mischer fortlaufend absinkt.

8. Verfahren nach einem der vorhergehenden Ansprüche, wobei das Kohlendioxid so zugeführt wird, dass es in dem ersten Inline-Mischer der Reihe unter einem Druck im Bereich von 50 kPa bis 150 kPa mit der Suspension gemischt wird.

9. Verfahren nach Anspruch 8, wobei das Kohlendioxid so zugeführt wird, dass es in mindestens zwei aufeinander folgenden Inline-Mischern der Reihe mit der Suspension unter Drucken gemischt wird, die von Mischer zu Mischer fortlaufend geringer werden.

10. Verfahren nach einem der vorhergehenden Ansprüche, wobei das mit der Suspension zu mischende Kohlendioxid in den statischen Inline-Mischern jeweils über eine eigene Leitung dem jeweiligen Gemisch mit der Suspension zugeführt wird.

11. Verfahren nach Anspruch 10, wobei das Kohlendioxid, das über die Leitungen jeweils zugeführt wird, von einer gemeinsamen Quelle bereitgestellt wird.

12. Verfahren nach Anspruch 10 oder 11, wobei die Leitungen jeweils Vorrichtungen zum unabhängigen Einstellen des Drucks des zugeführten Kohlendioxids aufweisen, das mit der wässrigen Suspension gemischt werden soll.

13. Verfahren nach einem der vorhergehenden Ansprüche, wobei die wässrige Suspension nicht-verbrauchende Feststoffe enthält, die von dem in dem wässrigen Medium erzeugten gefällten Calciumcarbonat eingefangen und/oder gebunden werden.

14. Verfahren nach Anspruch 13, wobei die nicht-verbrauchenden Feststoffe Fasern und/oder Teilchen umfassen.

15. Verfahren nach Anspruch 13, wobei die nicht-verbrauchenden Feststoffe Cellulose-Fasern und/oder anorganische Pigmentteilchen umfassen.

16. Verfahren nach Anspruch 14 oder 15, wobei die nicht-verbrauchenden Feststoffe Feinteilchen umfassen.

17. Verfahren nach Anspruch 16, wobei die Feinteilchen aus einem wässrigen Abstrom eines Industrieverfahrens erhalten sind.

18. Verfahren nach Anspruch 17, wobei die Feinteilchen aus einem wässrigen Abstrom eines Papierherstellungs- oder Papierbeschichtungs-Verfahren erhalten sind.

19. Verfahren nach einem der Ansprüche 13 bis 18, wobei die nicht-verbrauchenden Feststoffe 0,5 bis 20 Gew.% der wässrigen Suspension der nicht-verbrauchenden Feststoffe in dem wässrigen Medium ausmachen.

20. Verfahren nach einem der Ansprüche 13 bis 19, wobei das Verhältnis zwischen dem Trockengewicht der nicht-verbrauchenden Feststoffe und dem Calciumhydroxid, das für eine Mischen mit dem Kohlendioxid dem ersten statischen Inline-Mischer zugeführt wird, im Bereich von 1:10 bis 10:1 liegt.

21. Verfahren nach Anspruch 20, wobei eine wässrige Suspension der nicht-verbrauchenden Feststoffe und eine wässrige Calciumhydroxid-Suspension in einem statischen Inline-Mischer zusammen gemischt werden, so dass man eine wässrige Suspension erhält, die dem ersten statischen Inline-Mischer zugeführt werden kann.

## Revendications

1. Procédé pour la production continue ou semicontinue d'un produit solide comprenant du carbonate de calcium précipité dans un milieu aqueux, lequel procédé consiste à délivrer une suspension aqueuse d'hydroxyde de calcium successivement à travers une série d'au moins deux mélangeurs statiques en ligne alors que du dioxyde de carbone est introduit dans la suspension dans ou avant chacun des mélangeurs, du dioxyde de carbone et la suspension aqueuse sont par là intimement mélangés dans chaque mélangeur pour faciliter la réaction du dioxyde de carbone avec de l'hydroxyde de calcium dissous dans le milieu aqueux, l'hydroxyde de calcium dans la suspension délivrée dans la série des mélangeurs statiques en ligne étant progressivement consommé et converti en carbonate de calcium lorsque la suspension passe à travers la série.

2. Procédé selon la revendication 1 et dans lequel la série des mélangeurs statiques en ligne comprend au moins trois tels mélangeurs.

3. Procédé selon la revendication 2 et dans lequel la série des mélangeurs statiques en ligne comprend de quatre à sept tels mélangeurs.

4. Procédé selon la revendication 1, la revendication 2 ou la revendication 3 et dans lequel chacun des mélangeurs statiques en ligne comprend un boîtier externe et de nombreuses pâles ou chicanes statiques internes qui occasionnent le fait que la suspension est soumise à des modifications de direction.

5. Procédé selon l'une quelconque des revendications précédentes et dans lequel chacun des mélangeurs statiques en ligne permet au dioxyde de carbone d'être uniformément distribué à travers la suspension mélangée dans la forme de fines bulles.

6. Procédé selon l'une quelconque des revendications précédentes et dans lequel la suspension aqueuse entre dans le premier de la série des mélangeurs à une pression hydraulique dans l'intervalle de 50 kPa à 100 kPa.

7. Procédé selon l'une quelconque des revendications précédentes et dans lequel la pression hydraulique de la suspension aqueuse chute progressivement lorsqu'elle passe à travers la série des mélangeurs statiques en ligne.

8. Procédé selon l'une quelconque des revendications précédentes et dans lequel du dioxyde de carbone est délivré pour être mélangé avec la suspension dans le premier mélangeur en ligne dans la série à une pression dans l'intervalle de 50 kPa à 150 kPa.

9. Procédé selon la revendication 8 et dans lequel du dioxyde de carbone est délivré pour être mélangé avec la suspension dans au moins deux mélangeurs en ligne subséquents dans la série à des pressions progressivement réduites de mélangeur-à-mélangeur.

10. Procédé selon l'une quelconque des revendications précédentes et dans lequel le dioxyde de carbone à mélanger avec la suspension dans chaque mélangeur statique en ligne est délivré le long d'un conduit séparé pour chaque mélange avec la suspension.

11. Procédé selon la revendication 10 et dans lequel le dioxyde de carbone délivré le long de chaque conduit est fourni par une source commune.

12. Procédé selon la revendication 10 ou la revendication 11 et dans lequel chaque conduit incorpore un moyen pour ajuster indépendamment la pression du dioxyde de carbone délivré à mélanger avec la suspension aqueuse.

13. Procédé selon l'une quelconque des revendications précédentes et dans lequel la suspension aqueuse comprend des matières solides non consommables à entraîner par et/ou à lier au carbonate de calcium précipité produit dans le milieu aqueux.

14. Procédé selon la revendication 13 et dans lequel les matières solides non consommables comprennent des fibres et/ou des particules.

15. Procédé selon la revendication 13 et dans lequel les matières solides non consommables comprennent des fibres de cellulose et/ou des particules de pigment inorganique.

16. Procédé selon la revendication 14 ou la revendication 15 et dans lequel les matières solides non consommables comprennent des fines.

17. Procédé selon la revendication 16 et dans lequel les fines ont été obtenues à partir d'un effluent aqueux d'un procédé industriel.

18. Procédé selon la revendication 17 et dans lequel les fines ont été obtenues à partir d'un effluent aqueux provenant d'un procédé de fabrication de papier ou de revêtement de papier.

19. Procédé selon l'une quelconque des revendications 13 à 18 et dans lequel les matières solides non consommables constituent de 0,5 % à 20 % en poids de la suspension aqueuse des matières solides non consommables dans le milieu aqueux.

20. Procédé selon l'une quelconque des revendications 13 à 19 et dans lequel le rapport en poids sec des matières solides non consommables à l'hydroxyde de calcium délivré pour être mélangé avec du dioxyde de carbone dans le premier mélangeur statique en ligne se trouve dans l'intervalle de 1:10 à 10:1.

21. Procédé selon la revendication 20 et dans lequel une suspension aqueuse des matières solides non consommables et une suspension aqueuse de l'hydroxyde de calcium sont mélangées ensemble dans un mélangeur statique en ligne pour produire la suspension aqueuse à délivrer dans le premier mélangeur statique en ligne.
